(19) Europäisches Patentamt
European Patent Office
Office européen des brevets

(11) Publication number: 0 050 297 B1

(12) EUROPEAN PATENT SPECIFICATION

(45) Date of publication of patent specification: 27.03.85

(51) Int. Cl.$^4$: C 02 F 1/42, B 01 J 39/04, B 01 J 49/02

(21) Application number: 81108271.8

(22) Date of filing: 13.10.81

# (54) Water softener for the domestic linen wash.

(30) Priority: 16.10.80 IT 1268580

(43) Date of publication of application:
28.04.82 Bulletin 82/17

(45) Publication of the grant of the patent:
27.03.85 Bulletin 85/13

(84) Designated Contracting States:
AT BE CH DE FR GB LI LU NL SE

(56) References cited:
AU-B- 438 707
GB-A-1 031 523
US-A-2 855 364
US-A-3 342 338
US-A-3 454 492
US-A-3 530 876

(73) Proprietor: MIRA LANZA S.p.a.
Via Rivarolo 14
I-16161 Genova (IT)

(72) Inventor: Toninelli, Giuseppe
Via Caltana 18
I-30030 Scaltenigo di Mirano (Venezia) (IT)
Inventor: Favari, Gian Franco
Via Dante 25
I-30034 Mira (Venezia) (IT)

(74) Representative: Porsia, Dino, Dr.
c/o Succ. Ing. Fischetti & Weber Via Caffaro 3
I-16124 Genova (IT)

EP 0 050 297 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to a small-sized, easily attached device, intended for domestic use in softening a sufficient quantity of the supply water required for a normal linen washing operation, either manual or mechanical in a washing machine, to optimum technical and economic conditions. The importance and usefulness of softening the water used for domestic linen washing are apparent, in that it permits to "relieve" the task of a detergent in neutralizing the negative effect of the water hardness on the performance and results of a washing operation.

As a consequence, the "cleansing force" of a detergent can be utilized to a greater extent in that the requirements of seizing action on the salts of calcium magnesium (hardness producers) will be limited.

A final result can be a reduction, in the present formulations, of the builders having a seizing action, such as polyphosphates, the use of which is being discouraged by regulations all over the world for ecological reasons, due to the well-known eutrophication effects on sea water and lake water adjacent to the coasts.

The ion-exchange water-softening has been widely applied both in the industrial and civil fields, and has been carried out by several devices having different technical and constructional characteristics, often complicated and expensive.

The resins generally used for this purpose are formed by polymers of high molecular weight such as styrenes/divinylbenzene, insoluble in water which serve as supports receiving, during the step of preparation or polymerization, active functional groups, of anionic characteristics, generally sulfonic groups, that after salification into sodium form, can exchange their cations with the $Ca^{++}$ and $Mg^{++}$ cations present in hard water.

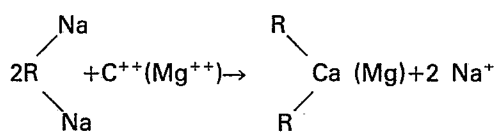

When all the available exchange groups have been exhausted, the resins must be regenerated by means of concentrated solutions of NaCl; the contact between the resins and the regeneration solution should last a sufficient period of time, such as 30 to 60 minutes.

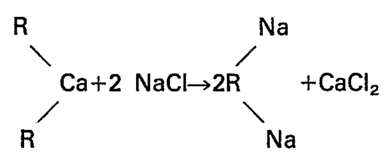

"Exchange capacity" can be defined as the equivalent in $CaCO_3$ of the calcium and magnesium salts (expressed in g) existing in the water and that is exchanged or "seized" by 1 litre of resin; "regenerative level" can be defined as the quantity of NaCl used in the regeneration cycle.

These values can be used to calculate the "efficiency" of the complete cycle of exchange and regeneration, the theoretical value being given by the following formula:

$$Y=\frac{\text{Equivalent weight of } CaCO_3}{\text{Equivalent weight of NaCl}}=0.855$$

Practically, this ratio is always lower than the theoretical value because the regeneration reaction will not saturate all the exchange groups, and because as the resin saturation increases, the "force" of the solution ions to remove the ions fixed on the resin decreases.

As a consequence, the amount of NaCl is, practically, greater than the theoretical stoichiometric value.

The economic cost of the process substantially depends upon the value of Y and hardness of the water to be treated.

Several types of devices based on the ion exchange principle are presently used.

From US—A—3.530.876 filed October 25, 1968 issued September 29, 1970 to Theodore R. Stoner, it is known an apparatus for controlling liquid flow into and out of the brine tank of a water softener. According to the said prior art device, the amount of water admitted is controlled by amplitude of movement of a float between two predetermined positions, and the discharge of the brine from the brine tank takes place by suction through a Venturi device.

Moreover, according to the above prior art device a saturated solution of regenerating brine is formed which is thereafter diluted at a fixed ratio which is determined by the dimensions of the Venturi pipe.

The present invention aims to overcome the above and other drawbacks and disadvantages of the prior art devices.

According to a main feature of the present invention, the above object is attained by providing, in a water softener for domestic purposes, adapted to be also attached to a common washing machine and operating on the principle of the ion exchange through resins, of a regeneration cycle occurring automatically under absolutely constant conditions, which can be easily preestablished, by only varying the dosage of the regenerating salt, according to the volume and hardness of the water to be treated.

According to a still further feature of the invention, a water softener is provided comprising:

a) a tank fitted with a closure cover bearing incorporated an impulse-actuated valve, connected to a float controlling the inlet and the outlet of the water and the brine through a calibrated hole in the bottom of the tank, and containing therein a perforated container for receiving the sodium chloride required for regenerating the resins;

b) a three-way distributing valve having two operating positions, one for the ion exchange cycle (washing) and another for the regeneration cycle;

c) a tank containing the resins within pipes of glass, plastics or other material, either of straight vertical shape or having a U shape.

The softening system according to this invention is characterized by an optimized regeneration cycle so as to obtain an economic exchange process and a constantly concentrated brine throughout the regeneration cycle, the latter being regulated in accordance with the hardness of the water to be treated.

The system is operative within a wide range of flow-rates of the water-supply, such as 0 to 700 litres/h, so as to include the flow-rates of the most common washing machines marketed at present.

The requirement of resins is also very limited, that is about 1 litre, whereas other small-capacity plants require, for the same rate of exchange, much greater amounts, such as 5 to 10 litres.

These features grant the same results as in the industrial and automated plants, even in the absence of complicated timing and automated systems.

The lower initial cost and limited operating cost, granted by the "calibration" ore regulation of the exchange process, especially with regard to the proportioning of the salt, as a function of the initial hardness of the water to be treated, will provide a system which is more economic than any other softening system. An essential technical feature, also, is constituted by the high and constant value of the efficiency factor Y at any value of the initial hardness of the water to be treated and corresponding regeneration levels.

Therefore, the economic cost of the softening process depends only on the hardness of the water to be treated.

Another advantage is that the device according to the above system can be permanently connected to the water-supply, to the washing machine and to the discharge outlet (the only requirement being to connect the resin-containing column in such a position as to locate its top edge at a higher level than the discharge) without any displacement or connection to external collection containers.

Further features and advantages of this invention will be better understood in the course of the following detailed description of some preferred embodiments thereof, made with reference to the accompanying drawings, wherein:

Fig. 1 is a diagrammatic view of the device according to the invention; Fig. 2 is a cross-sectional view of a detail of the device of Fig. 1; Fig. 3 is a second embodiment of the device of Fig. 2; Fig. 4 is a graphical representation of the diagrams of the hardness of the water eluted through the resins for the three regeneration levels illustrated in Example 1. The ordinate indicates the hardness in French degrees (°F) and the abscissa indicates the volume of the eluted water; Fig. 5 shows the operative exchange capacity and plots the exchanged amounts of $CaCO_3$ (calculated from the difference of hardness between supplied water and eluted water) as a function of the proportioning of regenerating material as in Example 1; Figs. 6 and 7 show, respectively, the diagrams of the residual hardness of the eluted water and operative exchange capacity in Example 2.

The researches to design and manufacture an experimental device were carried out assuming to have to soften 50 to 100 litres of water (that is the average quantity of water required only in the steps of pre-washing, washing and first rinsing in a common domestic washing machine), so as to obtain a residual hardness not higher than 5°F, which value is considered as acceptable for washing purposes.

In the total quantity of 120—150 litres required for a complete washing cycle, the softening process is limited only to the amount of water required for the above-specified steps occurring in the presence of a detergent, to eliminate the inconveniences caused by hardness in the presence of a detergent to a washing machine and washed linen due to the deposits of incrustation materials.

The values of the water hardness change considerably from region to region; in Italy, average values of 25 to 30°F have been reported, with maximum values of 70 to 80°F. In case of these maximum values, the 50 to 60 litres of water to be treated would require a maximum amount of $CaCO_3$ of 40 to 50 g.

With reference to the drawings, and particularly to Fig. 1, the numeral 1 indicates a three-way valve with two operative positions, connected directly to the water-supply 2. This valve is actuated by means of a knob 101 so as to switch it from the wash position, wherein the water from the supply 2 is fed to the ion exchange column 3 contained in a tank 4, to the regeneration position wherein the valve discharges through an outlet 5. With the valve in the wash position, the water from the supply 2 flows through the pipe 6 and into the ion exchange column 4, and then through the pipe 7 and connecting piece 8 into the washing machine. During this step, a portion of the water from the pipe 7 flows through the pipe 9 with calibrated

hole 10 into a tank 11 containing a basket 12 for the sodium chloride crystals. The tank 11 is sealingly closed at the top by a threaded cover 111 having a central vent or bleed hole 211 that can be closed by a valve member 13 supported by a float 14. Therefore, when the water in the tank 11 has reached a preestablished level, the valve member 13 closes the hole 211 and thus prevents any further entrance of water into the tank 11. A pushbutton 113, connected to the float 14 and associated valve member 13, when depressed, opens again the communication between the tank 11 and atmosphere and thus permits the brine formed in the tank 11 to discharge therefrom, through the calibrated hole 10, pipe 9 and pipe 7, into the ion exchange column 3 for regenerating the ion exchange resins, and therefrom, through the pipe 6 and outlet 5 to waste, when the valve 1 is in the regeneration position.

Fig. 2 shows the tank 11 and associated elements with more detail. As better shown in this Figure, fixed to the inner side of the cover 111 are two upright parallel guides 311 for guiding the float 14. Suspended from the free ends of these guides is a basket 12 for the sodium chloride. Pivoted on the top side of the float 14 is one end of a lever 114, the other end of which is pivoted to the lower side of the cover 111, so that the lever is inclined with respect to the vertical axis of the tank 11. Pivoted at an intermediate portion of the lever 114 is another upright lever 214 the top end of which is pivotably connected to the valve member 13 cooperating with the valve seat 213 communicating through a conduit in the cover 111 with the vent hole 211. A pushbutton 113 for opening the communication to the atmosphere is connected to the valve member 13 through a small stem 313.

Fig. 3 shows a modification of the device of Figs. 1 and 2. In this modification, the valve member 13 is constantly biased against the valve seat 213 by a spring 413 interposed between the valve seat 213 and an abutment member 513 secured to the end of the stem 313 opposed to the end carrying the valve member 13.

A lever 314 is pivoted at one end to the cover 111 and at the other end to the float 14. This lever cooperates with an abutment head 613 secured to the lower side of the valve member 13 whereby when the float is in a low position said lever holds the valve member 13 away from the valve seat 213, whereas when the float is in the upper position said lever permits the valve member to contact the valve seat.

Under all other respects, this device operates as that of Fig. 2.

The operation of the device is now apparent.

Before starting the device (already connected to the water supply and to the washing machine), the required amount of sodium chloride crystals is introduced in the filter-container 12 after unscrewing and removing the plug 111.

After re-inserting the plug, the water supply can be opened by rotating the valve 1 from the closed position to the wash position; water flows into the tank 4 through the resins and into the tank 11 through the calibrated hole 10. The water fills up the tank completely, dissolving the sodium chloride therein, until it is automatically shut off by the float 14 that closes the valve 13—213.

The washing cycle of the washing machine can now begin.

All the water flowing into the washing machine is softened during the passage through the resins; during this step, the sodium chloride solution (brine) formed in the tank 11 cannot flow out therefrom because the pressure in the system is sufficient to hold it therein even when the washing machine is open to the water supply.

On completion of the washing cycle of the machine, the valve 1 must be rotated manually to the regeneration position; the pressure of the water is thus relieved through the outlet 5. By depressing now the vent or bleed pushbutton 113 on the cover of the tank, the brine is permitted to flow out the tank 11 and drop into the resins so as to regenerate them.

The duration of the regeneration depends upon the emptying time of the tank 11 and is about 50 minutes.

On completion of the regeneration a new exchange cycle and simultaneous washing cycle can be started, by rotating the valve 1 to the wash position after supplying the tank 11 with the required amount of sodium chloride. The proportioning of the salt, in the range of 50 to 150 g, can be facilitated by indications or marks on the tank 11 at various volumetric levels of the basket, corresponding to various possible values of the supply water, which, obviously must be known.

In the use of the device, the ion exchange system has been evaluated and analyzed, using different volumes of resin and different regenerative levels and with increasing amounts of sodium chloride as regenerating material.

The following example illustrate the operative conditions and performances that can be obtained to the invention.

Example 1

| | | |
|---|---|---|
| Tank 11 (brine) | | volume 1500 ml |
| Resin column | | column 500 ml |
| | | height 47 cm |
| | | diameter 3.7 cm |
| Supply-water | | hardness 17.5°F |
| | | flowrate 300 l/h |
| Regeneration with | 50 g NaCl | (conc.brine 3.3%) |
| | 100 g NaCl | (conc.brine 6.6%) |
| | 150 g NaCl | (conc.brine 10.0%) |

Fig. 4 shows, for each type and amount of resin, the diagrams of the hardness of the water that has flowed through the resins for the three regeneration levels, employing 50, 100 and 150 g of NaCl, respectively; the ordinate indicates the hardness in French degrees (°F), and the abscissa shows the volume of treated water.

Fig. 5 shows the operative exchange capacity and indicates the amounts of exchanged amounts of $CaCO_3$, calculated on the basis of the difference of hardness between supply-water and eluted water, as a function of the proportioning of the regenerating material (NaCl).

The exchange efficiences Y that can be calculated from the diagram of Fig. 5 are:

| | | | |
|---|---|---|---|
| with 50 g NaCl | 28 g $CaCO_3$ | exchanged | Y=0.56 |
| with 100 g NaCl | 38.5 g $CaCO_3$ | exchanged | y=0.39 |
| with 150 g NaCl | 44.5 g $CaCO_3$ | exchanged | Y=0.31 |

These data indicate that the exchange efficiency, expressed by the factor Y, is not constant at the three considered regeneration levels, but decreases with the increase of the proportion of NaCl. The volume of the resin, therefore, is too low, with resultant saturation at high regeneration levels.

Example 2

Operating conditions:

| | | |
|---|---|---|
| Tank 11 (brine) | | volume 1500 ml |
| Resin column | | volume 1000 ml |
| | | height 47 cm |
| | | diameter 5.2 cm |
| Supply-water | | hardness 21.5°F |
| | | flowrate 540 l/h |
| Regeneration with | 50 g NaCl | |
| | 75 g NaCl | |
| | 100 g NaCl | |
| | 150 g NaCl | |

As in Example 1, diagrams have been plotted of the residual hardness of the treated water and the operative exchange capacity (see Figs. 6 and 7, respectively).

The diagram of Fig. 7 shows the factors y, i.e. the efficiences of the exchange:

| | | | | |
|---|---|---|---|---|
| with 50 g NaCl | 25.5 g $CaCO_3$ | exchanged | Y=0.51 |
| with 75 g NaCl | 38 g $CaCO_3$ | exchanged | Y=0.50 |
| with 100 g NaCl | 53 g $CaCO_3$ | exchanged | Y=0.53 |
| with 150 g NaCl | 65.8 g $CaCO_3$ | exchanged | Y=0.43 |

The substantial constance of the values Y meaning a good proportionality between regeneration level and hardness of the water to be treated, and the high exchange capacity (that with 100 g NaCl permits to exchange 53 g $CaCO_3$, that is above 40—50 g which is the maximum value required in the most difficult conditions) demonstrate that the softening process, in the specified experimental conditions, is thoroughly satisfactory.

**Claims**

1. A water softener for domestic purposes, adapted to be also attached to a common washing machine and operating on the principle of ion exchange through resins, characterized by a regeneration cycle occurring automatically under absolutely constant conditions, which can be easily preestablished, by only varying the dosage of the regenerating salt, according to the volume and hardness of the water to be treated.

2. A softener according to claim 1, characterized by the fact of comprising:

a) a tank (11) fitted with a closure cover (111) bearing incorporated an impulse-actuated valve (13), connected to a float (14) controlling the inlet and the outlet of the water and the brine through a calibrated hole (10) in the bottom of the tank, and containing therein a perforated container (12) for receiving the sodium chloride required for regenerating the resins (3);

b) a three-way distributing valve (1) having two operating positions, one for the ion exchange cycle (6) (washing) and another for the regeneration cycle (5);

c) a tank (4) containing the resins (3) within pipes of glass, plastics or other material, either of straight vertical shape or having a U shape.

3. A softener according to claims 1 and 2, wherein the regenerating brine is formed in the tank with homogeneous concentration within the range of 3 to 10%, depending on the amount of solid salt dosed in the container therefor, by the action of the supply water flowing thereinto to fill it up completely.

4. A softener according to the preceding claims, characterized by the fact that it is adapted for operation with flow-rates of water in the range 0 to 700 l/h, with any value of hardness, generally in the range 0 to 100°F, with proportions of salts in the range 0 to 150 g, generally 50 to 100 g, and amounts of cationic exchange resin, of suitable shape and size, in the range 500 to 1000 ml.

5. A softener according to the preceding claims, characterized by the fact that it comprises manually-controlled supplying and distributing three-way valve (1) having two operative positions and connected, respectively, to the water-supply (2), to a discharger (5) and to the inlet (6) of an ion exchanger (3), the outlet of this exchanger (3) being connected to the user (8) and to a tank (11) containing the regeneration crystals, respectively, the later tank (11) being provided with a vent hole (211) communicating with the atmosphere and being further provided with an impulse-actuated valve (13) connected to a member (14), responsive to the level of the liquid in the tank (11), which closes the vent hole (211) when the water has completely filled the tank (11), and to a push-button (113) which can be operated from the outside, by pression, in order to re-open the vent hole (211) and so to let the tank communicate again with the atmosphere; and means (10-9-7) being provided to establish a communication between said tank (11) and the ion exchanger (3) in order to have the regenerating solution to flow through the exchanger (3) when said distributing valve (1) is switched to the discharge position (5).

**Patentansprüche**

1. Wasserenthärtungseinrichtung für Haushaltszwecke, geeignet auch zur Anbringung an einerherkömmlichen Waschmaschine und arbeitend nach dem Prinzip des Ionenaustauschs durch Harze, gekennzeichnet durch einen Wiederaufbereitungszyklus, der selbsttätig unter vollständig konstanten Bedingungen abläuft, die, durch alleiniges Verändern der Dosierung des Wiederaufbereitungssalzes gemäß dem Volumen und der Härte des zu behandelnden Wassers, leicht im voraus festsetzbar sind.

2. Wasserenthärtungseinrichtung nach Anspruch 1, dadurch gekennzeichnet, daß sie sich zusammen-setzt aus:

a) einen Vorratsbehälter (11), der mit einem Verschlußdeckel (111) versehen ist, welcher darin eingebaut ein impulsgesteuertes Ventil (13) lagert, das mit einem den Einlaß und den Auslaß des Wassers und der Lauge durch eine kalibrierte Öffnung (10) im Boden des Vorratsbehälters steuernden Schwimmer (14) verbunden ist, und der darin einen perforierten Einsatz (12) zur Aufnahme des für die Wiederaufbereitung der Harze (3) erforderlichen Natriumchlorids enthält;

b) einem Drei-Wege-Verteilerventil (1) mit zwei Arbeitsstellungen, nämlich einer für den Ionenaustauschzyklus (6) (Waschvorgang) und der anderen für den Wiederaufbereitungszyklus (5);

c) einem die Harze (3) innerhalb von Rohren aus Glas, Kunststoff oder anderem Material in entweder gerader senkrechter oder U-Form enthaltendem Gefäß.

3. Wasserenthärtungseinrichtung nach Anspruch 1 oder 2, worin die Wideraufbereitungslauge in dem Vorratsbehälter mit homogener Konzentration innerhalb des Bereichs von 3 bis 10% je nach der Menge an festem Salz hierfür innerhalb des Einsatzes durch die Wirkung des Speisewassers gebildet ist, welches dort hinein zum vollständigen Auffüllen fließt.

4. Wasserenthärtungseinrichtung nach den vorhergehenden Ansprüchen, gekennzeichnet durch den Umstand, daß sie für den Betrieb mit Strömungsmengen von Wasser in der Größenordnung von 0 bis 700 l/h mit jeglichem Härtegrad, allgemein in der Größenordnung von 0 bis 100 französischen Härtegraden, mit Salzproportionen in der Größenordnung von 0 bis 150 gr, allgemein 50 bis 100 gr und Mengen von kationischen Austauschharzen von geeigneter Form und Größe in der Größenordnung 500 bis 1000 ml geeignet ist.

5 Wasserenthärtungseinrichtung nach einem der vorhergehenden Ansprüche, dadurch gekennzeichnet, daß sie in handgesteuertes Drei-Wege-Zuführ- und Verteilungsventil mit zwei Arbeitsstellungen enthält, das an die Wasserversorgung (2), einen Auslaß (5) und den Einlaß (6) eines Ionenaustauschers (3) angeschlossen ist, wobei der Auslaß dieses Ionenaustauschers (3) an den Verbraucher (4) und einen Vorratsbehälter (11) mit den Wiederaufbereitungskristallen angeschlossen ist, von denen Letzterer Vorratsbehälter (11) mit einer Entlüftungsöffnung (211) versehen ist, die mit der Atmosphäre in Verbindung steht, und ferner mit einem impulsbetätigten Ventil (13) versehen ist, das einerseits mit einem Glied (14) verbunden ist, welches auf den Flüssigkeitspegel im Vorratsbehälter (11) anspricht und die Entlüftungsöffnung schließt, wenn das Wasser vollständig den Vorratsbehälter (11) angefüllt hat, und andererseits mit einem Betätigungsknopf (113), der von de Außenseite durch Druck betätigt werden kann, um die Entlüftungsöffnung (211) wieder zu öffnen und den Vorratsbehälter wieder mit der Atmosphäre zu verbinden; und daß Mittel (10-9-7) vorgesehn sine zur Herstellung einer Verbindung zwischen dem Vorratsbehälter (11) und dem Ionenaustauscher (3) zu dem Zweck, die Wiederaufbereitungslösung über den Austauscher (3) fließen zu lassen, wenn das Verteilerventil (1) in die Auslaßstellung (5) umgeschaltet ist.

**Revendications**

1. Dispositif d'adoucissement d'eau à usage domestique, destiné à être également fixé à une machine à laver courante, et fonctionnant suivant le principe de l'échange d'ions par des résines, caractérisé par un cycle de régénération se produisant automatiquement dans des conditions absolument constantes, qui peut être facilement établi à l'avance en faisant varier seulement la dose de sel de régénération en fonction du volume et de la dureté de l'eau à traiter.

2. Dispositif d'adoucissement suivant la revendication 1, caractérisé par le fait qu'il comprend:

a) un cuve (11) munie d'un couvercle de fermeture (111) qui incorpore une vanne (13) actionnée par impulsions, et reliée à un flotteur (14) commandant l'entrée et la sortie de l'eau et de la saumure par un trou calibré (10) ménagé dans le fond de la cuve, celle-ci contenant un récipient (12) perforé destiné à recevoir le chlorure de sodium requis pour la régénération des résines (3);

b) une vanne distributrice à trois voies (1) ayant deux positions de service, l'une pour le cycle d'échange d'ions (6) (lavage), et l'autre pour le cycle de régénération (5);

c) une cuve (4) contenant les résines (3) dans des conduits en verre, en matière plastique ou en un autre matériau, de forme verticale, rectiligne ou en forme de U.

3. Dispositif d'adoucissement suivant les revendications 1 et 2, caractérisé en ce que la saumure de régénération est formée, dans la cuve, en une concentration homogène de 3 à 10%, en fonction de la teneur en sel solide dosé dans le récipient destiné à cet effet, par l'action de l'eau de l'alimentation qui s'y écoule jusqu'à le remplir complètement.

4. Dispositif d'adoucissement suivant les revendications précédentes, caractérisé par le fait qu'il est adapté pour fonctionner à des débits d'eau allant de 0 à 700 l/h, avec n'importe quelle valeur de dureté comprise en général entre 0 et 100°F, avec des proportions de sel comprises entre 0 et 150 g et, en général entre 50 et 100 g, et des quantités d'une résine d'échange cationique de forme et de dimensions convenables comprise entre 500 et 1000 ml.

5. Dispositif d'adoucissement suivant les revendications précédentes, caractérisé par le fait qu'il comprend une vanne à trois voies (1) d'alimentation et de distribution commandée manuellement, ayant deux positions de service et reliées respectivement à l'alimentation en eau (2), à une évacuation (5) et à l'entrée (6) d'un échangeur d'ions (3), la sortie de cet échangeur (3) étant reliée à la machine utilisatrice (8) et à une cuve (11) contenant les cristaux de régénération respectivement, cette dernière cuve (11) étant munie d'un évent (211) communiquant avec l'atmosphère et étant en outre muni d'une vanne actionnée par impulsions (13) et reliée à un élément (14) sensible au niveau du liquide dans la cuve (11) qui ferme l'évent (211) quand l'eau a rempli complètement la cuve (11), et à un bouton-poussoir (113) qui peut être

manoeuvré de l'extérieur par poussée afin de réouvrir l'évent (211), et à faire ainsi communiquer à nouveau la cuve avec l'atmosphère; des moyens (10, 9, 7) étant prévus pour établir une communication entre la cuve (11) et l'échangeur d'ions (3) afin que la solution de régénération s'écoule dans l'échangeur (3) quand la vanne de distribution (1) est mise dans la position d'évacuation (5).

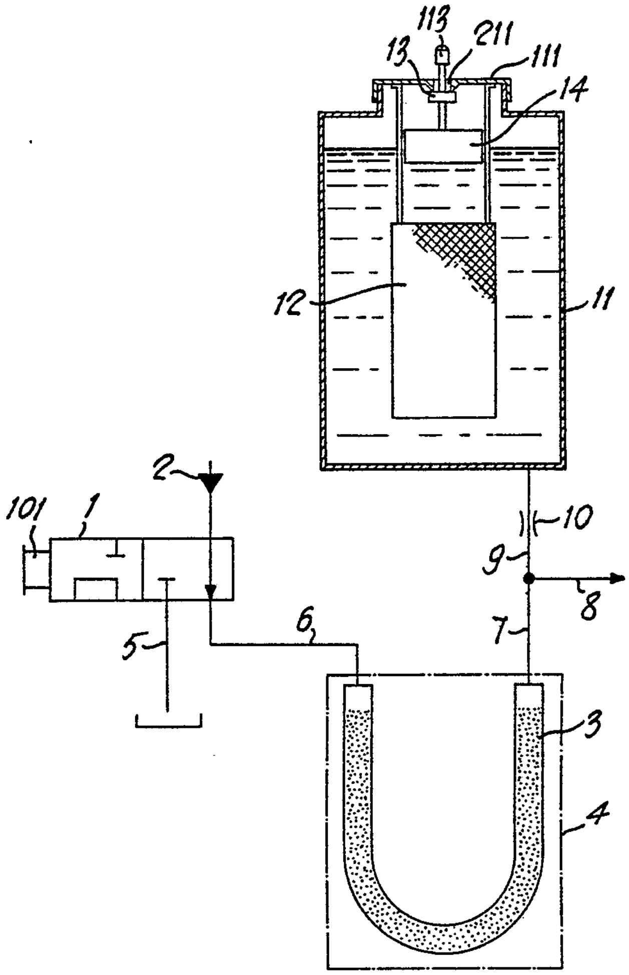


Fig.1

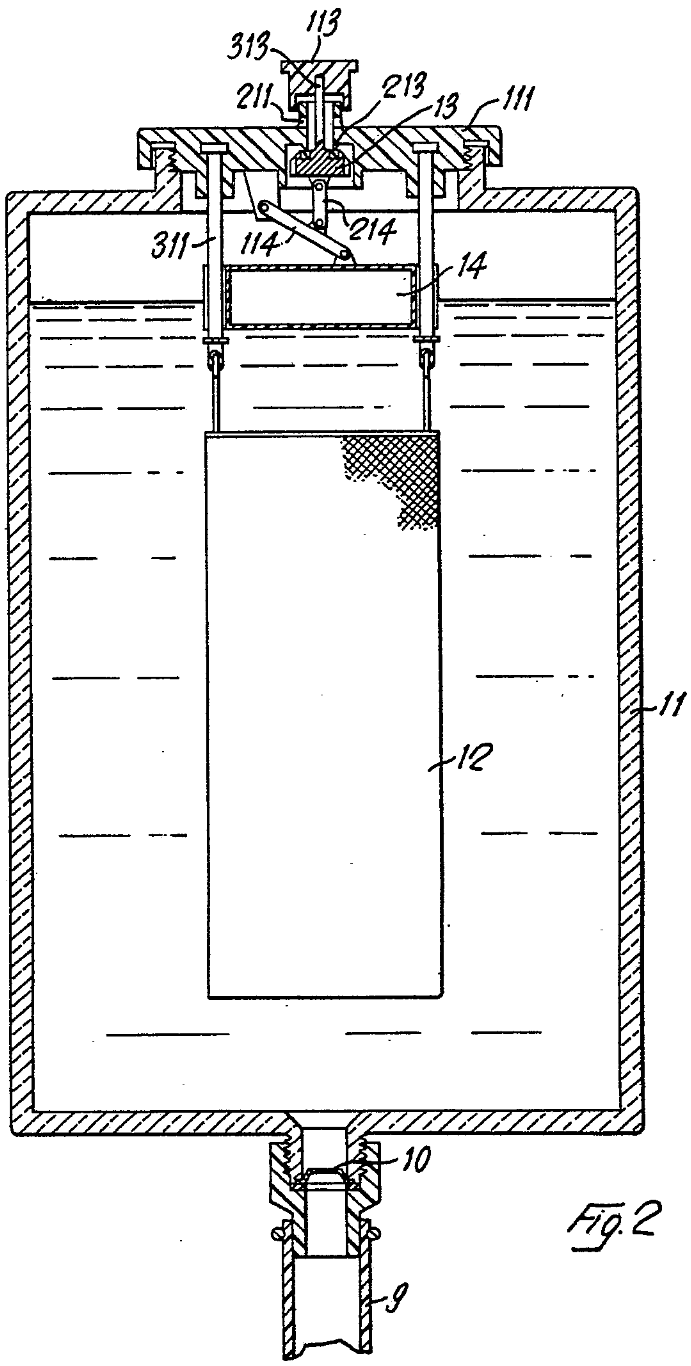


Fig.2

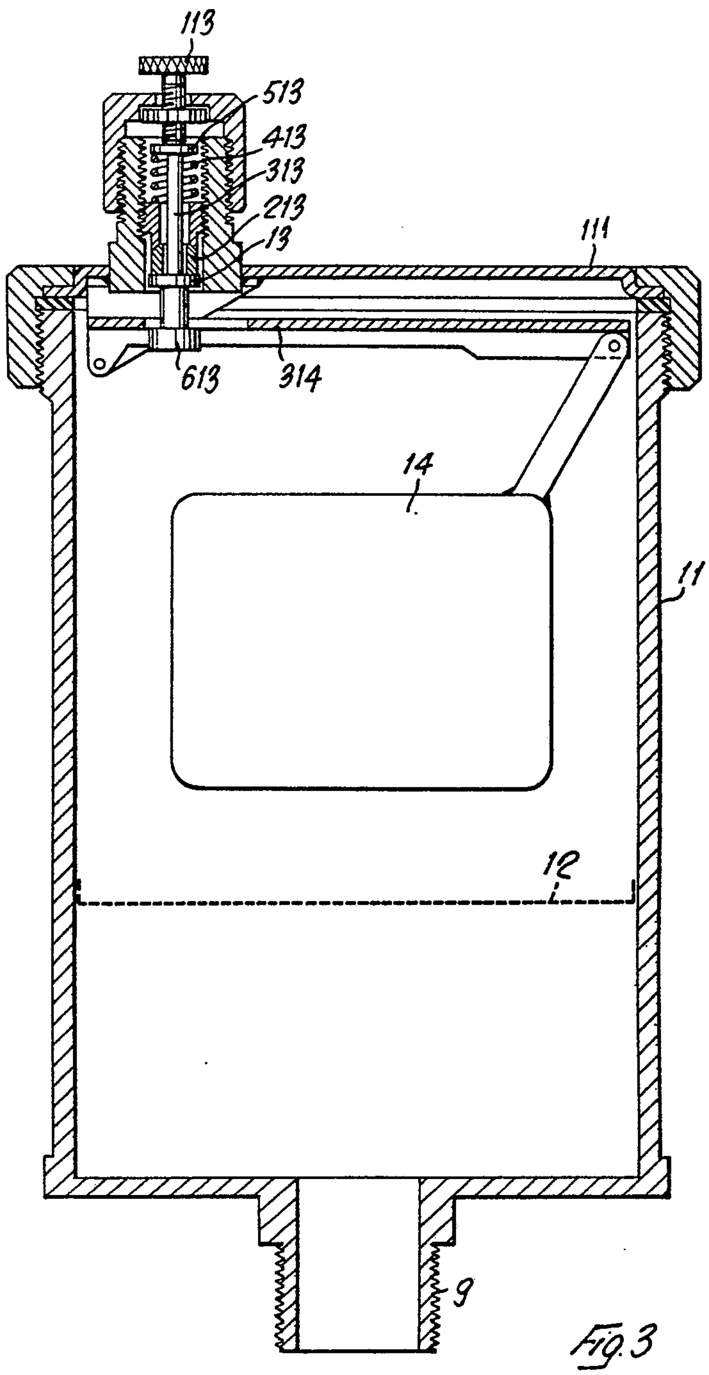


Fig.3

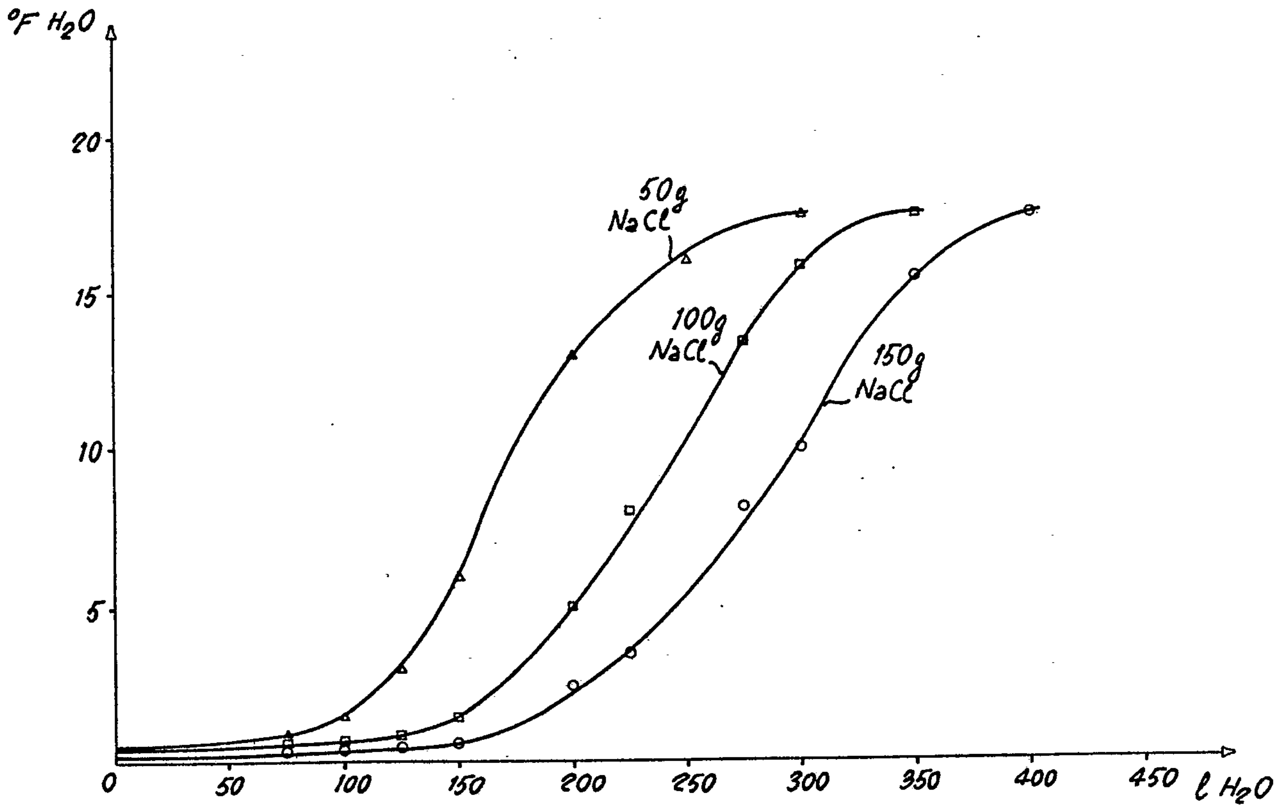
°F $H_2O$
20
15
10
5
0
50
100
150
200
250
300
350
400
450
ℓ $H_2O$
50g NaCl
100g NaCl
150g NaCl

Fig.4

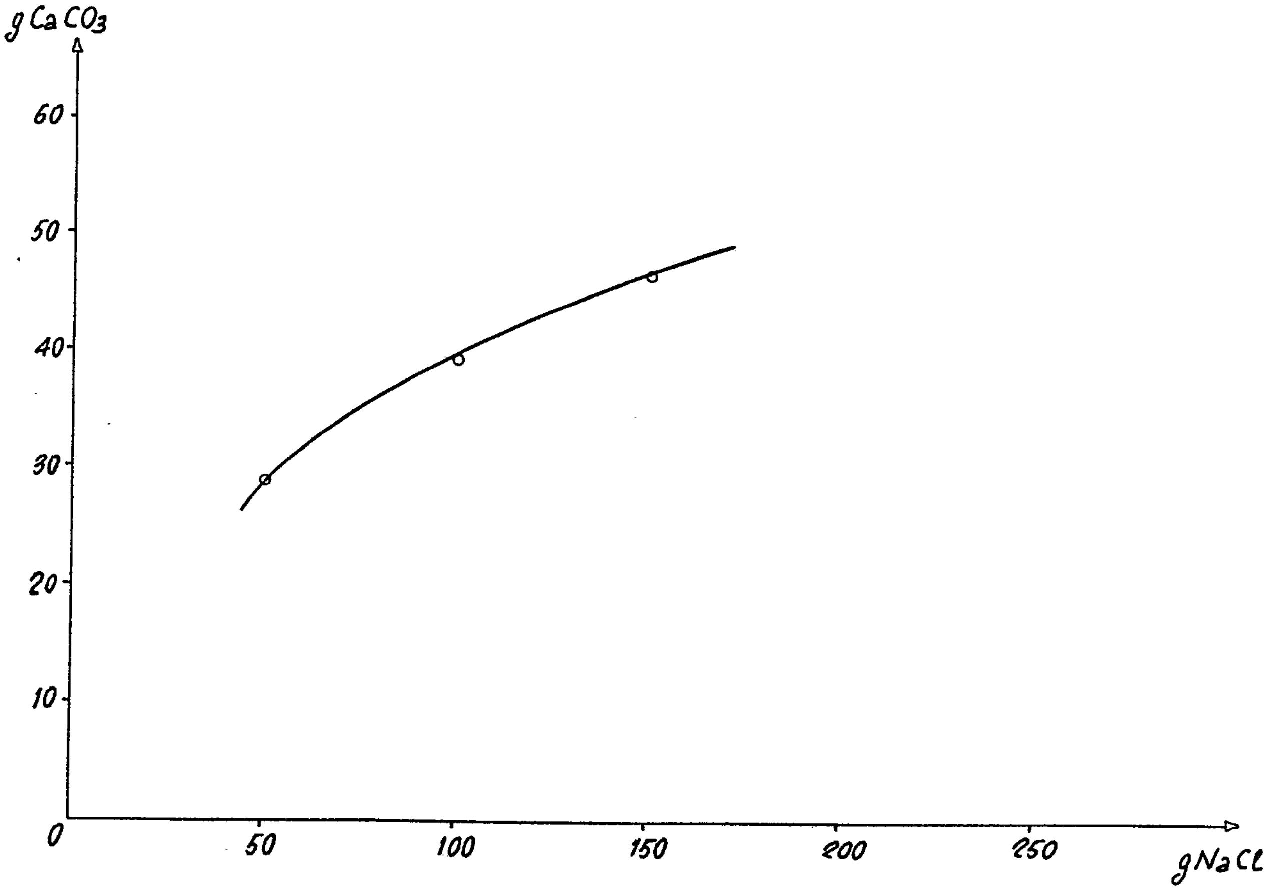


Fig.5

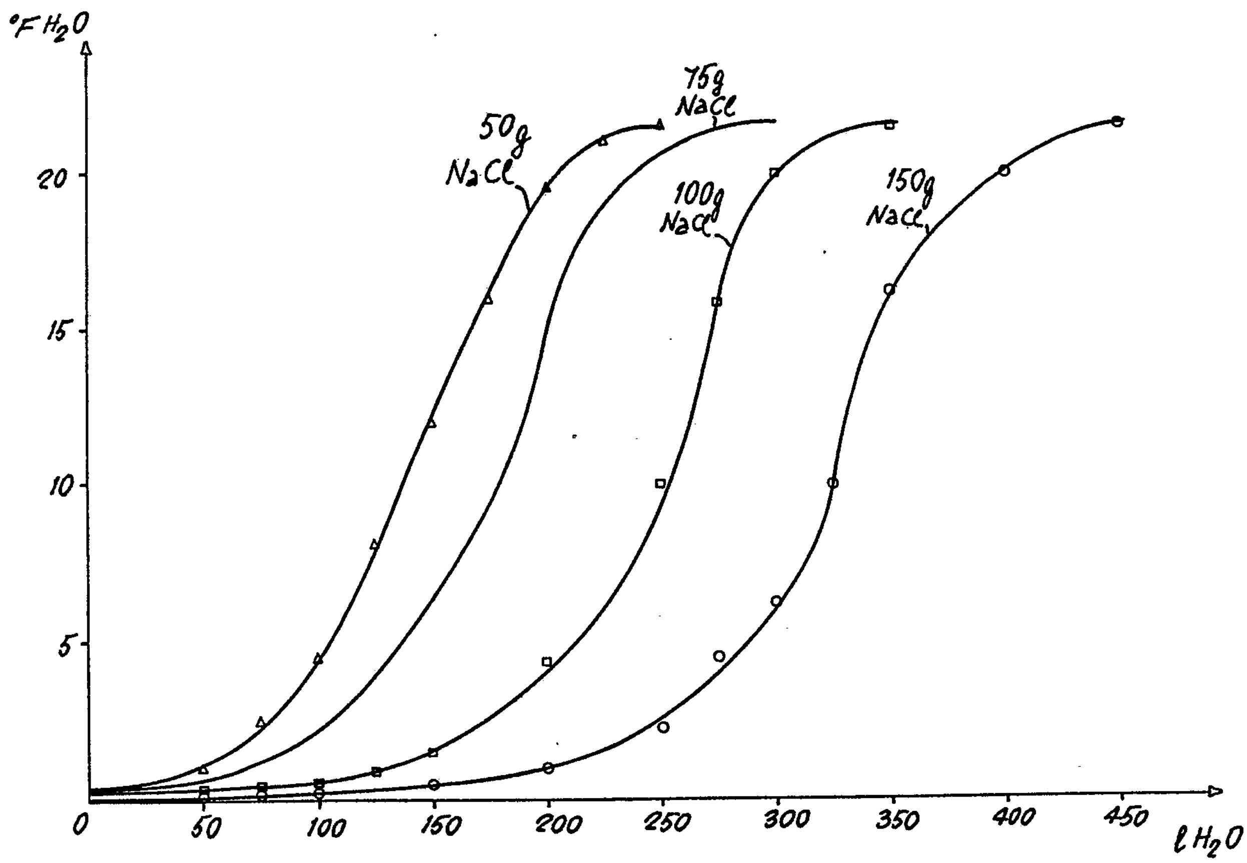
°F $H_2O$
20
15
10
5
0
50
100
150
200
250
300
350
400
450
l $H_2O$
50g NaCl
75g NaCl
100g NaCl
150g NaCl

Fig.6

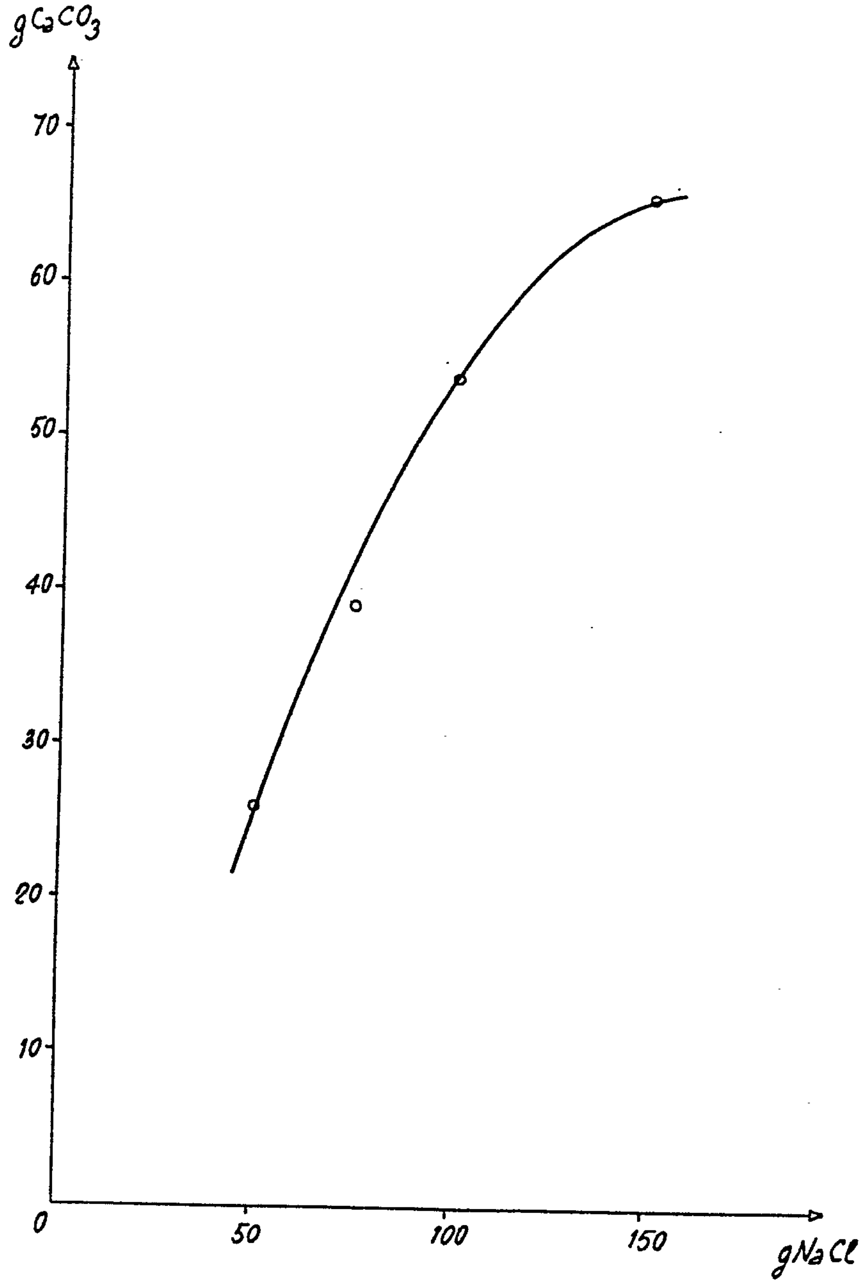


Fig. 7